# EUROPEAN PATENT APPLICATION

(11) **EP 4 318 688 A1**
(43) Date of publication of application: **07.02.2024**
(21) Application number: 22825219.3
(22) Date of filing: 09.06.2022
(51) Int. Cl.: H01M 8/04119, B01D 63/02

(54) **FUEL CELL MEMBRANE HUMIDIFIER**

(30) Priority: 16.06.2021 KR 20210078206
(71) Applicant: Kolon Industries, Inc., Seoul 07793 (KR)
(72) Inventor: KIM, Do Woo, Seoul 07793 (KR); KIM, Kyoung Ju, Seoul 07793 (KR); AHN, Na Hyun, Seoul 07793 (KR); KIM, In Ho, Seoul 07793 (KR)
(74) Representative: Ter Meer Steinmeister & Partner
(86) International application number: PCT/KR2022/008144
(87) International publication number: WO 2022/265294

(57) **Abstract**

The present disclosure relates to a fuel cell membrane humidifier in which the discharge performance of condensate generated in a humidification module is improved. The disclosed fuel cell membrane humidifier includes a humidification module configured to humidify air supplied from an outside with moisture in off-gas discharged from a fuel cell stack, and caps respectively coupled to both ends of the humidification module. The humidification module includes a mid-case in which an off-gas inlet through which the off-gas is introduced and an off-gas outlet through which the off-gas is discharged are formed. The off-gas outlet is formed on a bottom surface side of the mid-case and configured to discharge condensate generated in the humidification module to the outside.

## Description

### Technical Field

The present disclosure relates to a fuel cell membrane humidifier, and more particularly, to a fuel cell membrane humidifier in which the discharge performance of condensate generated in a humidification module is improved.

### Background Art

Fuel cells are power-generating cells that produce electricity by combining hydrogen with oxygen. Unlike general chemical cells such as dry cells or storage batteries, fuel cells are able to continuously produce electricity as long as hydrogen and oxygen are supplied, and have the advantage of being about twice as efficient as internal combustion engines because there is no heat loss.

In addition, fuel cells emit fewer pollutants because chemical energy generated by a combination of hydrogen and oxygen is directly converted into electrical energy. Therefore, fuel cells are environmentally friendly and have the advantage of reducing concerns about resource depletion due to increasing energy consumption.

Depending on the type of electrolyte used, such fuel cells may be mainly classified into polymer electrolyte membrane fuel cell (PEMFC), phosphoric acid fuel cell (PAFC), molten carbonate fuel cell (MCFC), solid oxide fuel cell (SOFC), and alkaline fuel cell (AFC).

Such fuel cells operate on the same fundamental principle, but differ in the type of fuel used, operating temperature, catalyst, electrolyte, etc. Among them, PEMFC operates at a lower temperature than other fuel cells and has high power density, allowing for miniaturization. Accordingly, PEMFC is known to be the most promising fuel cell not only in small-scale stationary power generation equipment but also in transportation systems.

One of the most important factors in improving the performance of PEMFC is to maintain moisture content by supplying more than a certain amount of moisture to a polymer electrolyte membrane (or a proton exchange membrane (PEM)) of a membrane electrode assembly (MEA). This is because when the polymer electrolyte membrane is dried, power generation efficiency is rapidly reduced.

There are several methods of humidifying the polymer electrolyte membrane, including 1) a bubbler humidification method of supplying moisture by passing target gas through a diffuser after filling a pressure-resistant vessel with water, 2) a direct injection method of supplying moisture directly to a gas flow pipe through a solenoid valve by calculating a required moisture supply for fuel cell reaction, and 3) a membrane humidifying method of supplying moisture to a gas fluid layer by using a polymer separation membrane.

Among them, the membrane humidifying method of humidifying the polymer electrolyte membrane by supplying water vapor to air to be supplied to the polymer electrolyte membrane by using a membrane that selectively allows only water vapor included in off-gas to pass therethrough is advantageous in that the membrane humidifier may be lightweight and miniaturized.

When the selective permeable membrane used in the membrane humidifying method is formed in a module, a hollow fiber membrane having a large permeable area per unit volume is preferable. In other words, when the membrane humidifier is manufactured by using the hollow fiber membrane, high integration of hollow fiber membrane with large contact surface area is possible, so it is possible to sufficiently humidify a fuel cell even with a small capacity, to use low-cost materials, and to recover moisture and heat contained in off-gas discharged from the fuel cell at a high temperature and thus reuse the recovered moisture and heat through the membrane humidifier.

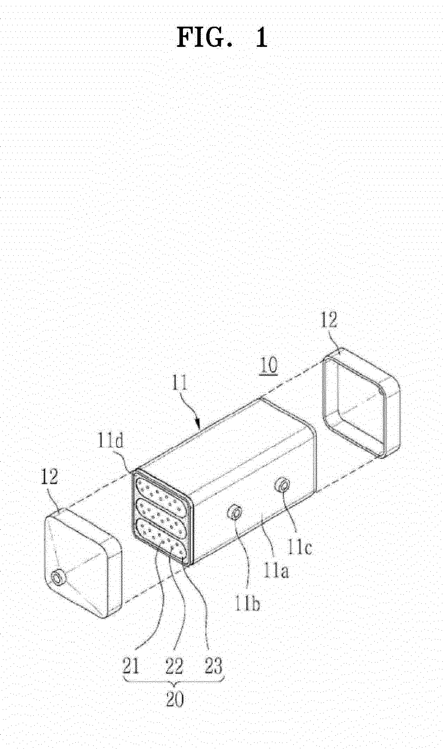

FIG. 1 is an exploded perspective view illustrating a fuel cell membrane humidifier according to the related art. As illustrated in FIG. 1, a fuel cell membrane humidifier 10 of the related art includes a humidification module 11 in which moisture is exchanged between air supplied from the outside and off-gas discharged from a fuel cell stack (not shown), and caps 12 coupled to both ends of the humidification module 11.

One cap among the caps 12 supplies, to the humidification module 11, air supplied from the outside, and another cap among the caps 12 supplies, to the fuel cell stack, air humidified by the humidification module 11.

The humidification module 11 includes a mid-case 11a having an off-gas inlet 11b and an off-gas outlet 11c, and a plurality of cartridges 20 disposed within the mid-case 11a. The cartridges 20 each have an inner case 23. A plurality of hollow fiber membranes 21 and a potting portion 22 are formed inside the inner case 23. The potting portion 22 fixes both ends of a bundle of hollow fiber membranes 21. The potting portion 22 is generally formed by curing a liquid polymer, such as liquid polyurethane resin, through a casting method.

A resin layer 11d is formed between the cartridge 20 and the mid-case 11a. The resin layer 11d fixes the cartridge 20 to the mid-case 11a and blocks the internal spaces of the caps 12 and the internal space of the mid-case 11a.

Air supplied from the outside flows along the cavities of the hollow fiber membranes 21. The off-gas flowing into the mid-case 11a through the off-gas inlet 11b flows into the inner case 23 through a mesh hole formed in one side of the inner case 23 and comes into contact with the outer surfaces of the hollow fiber membranes 21. Subsequently, the off-gas flows out of the inner case 23 through a mesh hole formed in the other side of the inner case 23 and is then discharged from the mid-case 11a through the off-gas outlet 11c. When the off-gas comes into contact with the outer surfaces of the hollow fiber membranes 21, the moisture contained in the off-gas penetrates through the hollow fiber membranes 21, and the air flowing along the cavities of the hollow fiber membranes 21 is humidified.

On the other hand, some moisture contained in the off-gas may not penetrate through the hollow fiber membranes 21 and may be condensed and collected on the bottom surface of the mid-case 11a. As condensate collected on the bottom surface reduces humidification efficiency, separate pipes and valves to discharge condensate have to be installed in the mid-case 11a. Therefore, the overall number of components increases, resulting in an increase in manufacturing costs, and space for additional components to be installed is required, which hinders the implementation of compact systems.

### Disclosure

### Technical Problem

The object of the present disclosure is to provide a fuel cell membrane humidifier in which the discharge performance of condensate generated within a humidification module is improved.

### Technical Solution

A fuel cell membrane humidifier according to an embodiment of the present disclosure includes a humidification module configured to humidify air supplied from an outside with moisture in off-gas discharged from a fuel cell stack, and caps respectively coupled to both ends of the humidification module. The humidification module includes a mid-case in which an off-gas inlet through which the off-gas is introduced and an off-gas outlet through which the off-gas is discharged are formed. The off-gas outlet is formed on a bottom surface side of the mid-case and configured to discharge condensate generated in the humidification module to the outside.

In the fuel cell membrane humidifier according to an embodiment of the present disclosure, at least a portion of the off-gas outlet may be formed to come into contact with a bottom surface of the mid-case.

In the fuel cell membrane humidifier according to an embodiment of the present disclosure, at least a portion of the off-gas outlet may come into contact with the bottom surface of the mid-case, and a virtual central axis of the off-gas outlet may be formed to be parallel to the bottom surface of the mid-case.

In the fuel cell membrane humidifier according to an embodiment of the present disclosure, at least a portion of the off-gas outlet may come into contact with the bottom surface of the mid-case, and a virtual central axis of the off-gas outlet may be formed to be inclined in a direction of gravity with respect to the bottom surface of the mid-case.

In the fuel cell membrane humidifier according to an embodiment of the present disclosure, a plurality of cartridges may be disposed in the mid-case and configured to accommodate a plurality of hollow fiber membranes. In the fuel cell membrane humidifier according to an embodiment of the present disclosure, the plurality of cartridges may include a first cartridge disposed closest to the off-gas inlet, and a second cartridge disposed at a position farther away than the first cartridge on at least one side of the first cartridge with respect to the off-gas inlet. In the fuel cell membrane humidifier according to an embodiment of the present disclosure, the second cartridge may be supplied with at least a portion of off-gas flowing into the off-gas inlet and at least a portion of off-gas distributed by the first cartridge.

In the fuel cell membrane humidifier according to an embodiment of the present disclosure, the first cartridge may be formed to have a greatest first width (W1) among the plurality of cartridges.

In the fuel cell membrane humidifier according to an embodiment of the present disclosure, the second cartridge may be formed to have a second width (W2) less than the first width (W1).

### Advantageous Effects

According to an embodiment of the present disclosure, the discharge performance of condensate generated within a humidification module may be improved. In addition, additional components for discharging condensate may be omitted, resulting in a reduction in manufacturing costs, and space for additional components to be installed is not required, making it possible to implement compact fuel cell systems. Furthermore, improved humidification efficiency may be obtained by improving distribution efficiency of off-gas flowing from a fuel cell stack.

### Description of Drawings

FIG. 1 is an exploded perspective view illustrating a fuel cell membrane humidifier according to the related art.
FIG. 2 is an exploded perspective view illustrating a fuel cell membrane humidifier according to an embodiment of the present disclosure.
FIG. 3 is a cross-sectional view illustrating a fuel cell membrane humidifier according to an embodiment of the present disclosure.
FIG. 4 is a cross-sectional view of a left side when taken along line A-A' of FIG. 2.
FIG. 5 is an exploded perspective view illustrating a fuel cell membrane humidifier according to another embodiment of the present disclosure.
FIG. 6 is a cross-sectional view of a right side when taken along line B-B' of FIG. 5.
FIG. 7 is a perspective view for describing an operating state within a humidification module of a fuel cell membrane humidifier according to another embodiment of the present disclosure.

### Mode for Invention

The present disclosure may include various modifications and embodiments, and therefore, the present disclosure will be explained in detail by taking exemplary embodiments. However, this is not intended to limit the present disclosure to particular embodiments, and it should be understood that the present disclosure is intended to include all variations, equivalents, and substitutes falling within the spirit and scope of the present disclosure.

The terms as used herein are only used to describe particular embodiments, and are not intended to limit the present disclosure. The singular forms as used herein are intended to include the plural forms as well unless the context clearly indicates otherwise. It should be noted that the terms "comprise," "include," or "have" as used in the present application are inclusive and therefore specify the presence of stated features, integers, steps, operations, elements, components, or any combination thereof, but do not preclude the presence or addition of one or more other features, integers, steps, operations, elements, components, or any combination thereof. Hereinafter, a fuel cell membrane humidifier according to an embodiment of the present disclosure will be described with reference to the drawings.

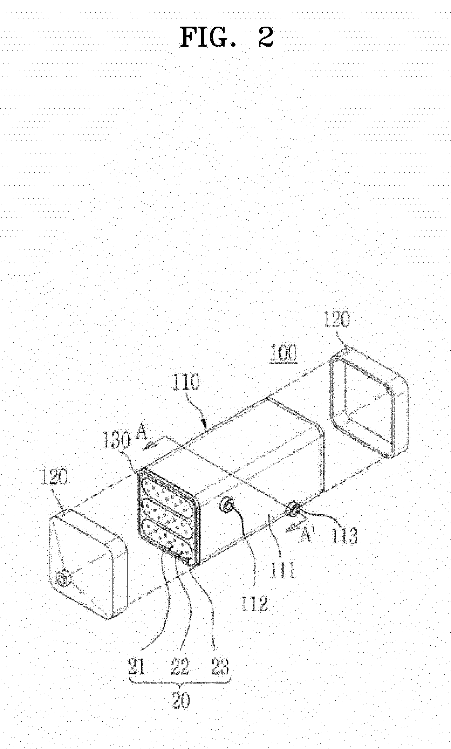

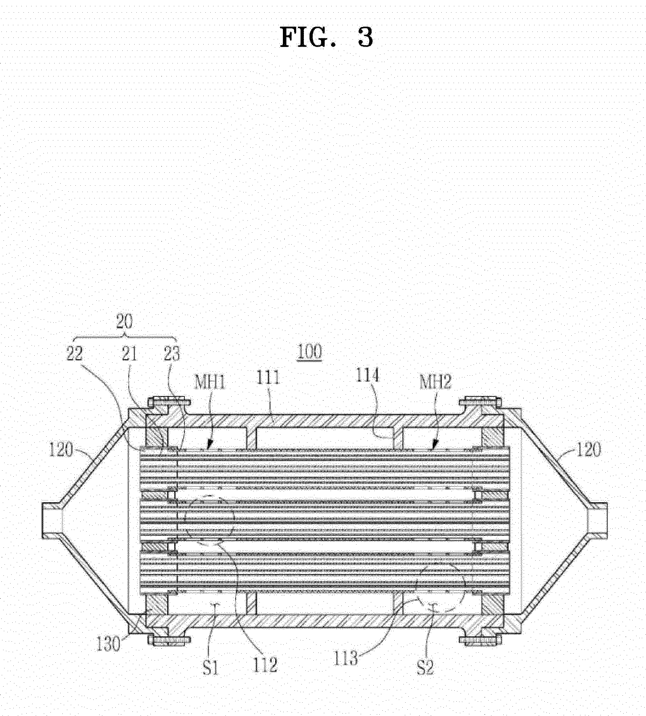

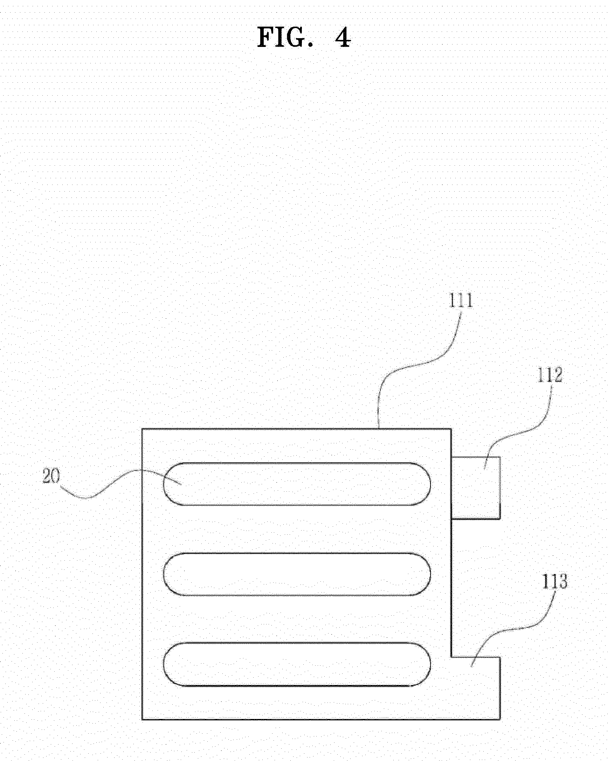

FIG. 2 is an exploded perspective view illustrating a fuel cell membrane humidifier according to an embodiment of the present disclosure, FIG. 3 is a cross-sectional view illustrating the fuel cell membrane humidifier according to an embodiment of the present disclosure, and FIG. 4 is a cross-sectional view of a left side when taken along line A-A' of FIG. 2.

As illustrated in FIGS. 2 to 4, the fuel cell membrane humidifier according to an embodiment of the present disclosure includes a humidification module 110 and caps 120.

The humidification module 110 performs moisture exchange between air supplied from the outside and off-gas discharged from a fuel cell stack (not shown). The caps 120 are coupled to both ends of the humidification module 110. One cap among the caps 120 is configured to supply, to the humidification module 110, air supplied from the outside, and another cap among the caps 12 is configured to supply, to the fuel cell stack, air humidified by the humidification module 110.

The humidification module 110 includes a mid-case 111 having an off-gas inlet 112 and an off-gas outlet 113, and at least one cartridge 130 disposed in the mid-case 111.

Of course, depending on the design, one cap among the caps 120 may allow off-gas to be supplied to the humidification module 110 so that the off-gas flows inside a hollow fiber membrane, and the other cap among the caps 120 may allow moisture-exchanged off-gas to be discharged to the outside. In addition, in this case, external air may be introduced through either the off-gas inlet 112 or the off-gas outlet 113, and air humidified by the humidification module 110 may be supplied to the fuel cell stack through the remaining one among the off-gas inlet 112 and the off-gas outlet 113. A flow direction of the external air may be the same as or opposite to a flow direction of the off-gas.

The mid-case 111 and the caps 120 may be each independently formed of a hard plastic or metal, and may each have a circular or polygonal cross-section in a width direction. The "circular" includes oval, and the "polygonal" includes a polygon with rounded corners. For example, the hard plastic may be polycarbonate, polyamide (PA), polyphthalamide (PPA), polypropylene (PP), or the like. An internal space of the mid-case 111 may be partitioned into a first space S1 and a second space S2 by a partition wall 114.

The cartridge 130 may include a plurality of hollow fiber membranes 21, a potting portion 22, and an inner case 23.

The hollow fiber membrane 21 may include polysulfone resin, polyethersulfone resin, sulfonated polysulfone resin, polyvinylidene fluoride (PVDF) resin, polyacrylonitrile (PAN) resin, polyimide resin, polyamideimide resin, polyesterimide resin, or a polymer film formed of a mixture of at least two selected therefrom.

The potting portion 22 fixes ends of the hollow fiber membrane 21. The potting portion 22 may be formed by curing a liquid resin such as liquid polyurethane resin by a casting method such as deep potting or centrifugal potting.

The inner case 23 has an opening at each end, and the hollow fiber membranes 21 are accommodated in the opening. The potting portion 22 in which the ends of the hollow fiber membranes 21 are potted closes the openings of the inner case 131. The inner case 23 includes a first mesh hole portion MH1 arranged in a mesh form to allow fluid communication with the first space S1, and a second mesh hole portion MH2 arranged in a mesh form to allow fluid communication with the second space S2.

Off-gas flowing into the first space S1 of the mid-case 111 through the off-gas inlet 112 flows into the inner case 23 through the first mesh hole portion MH1 and then comes into contact with the outer surfaces of the hollow fiber membranes 21. Subsequently, the off-gas deprived of moisture exits to the second space S2 through the second mesh hole portion MH2 and is then discharged from the mid-case 111 through the off-gas outlet 113.

A gasket 130 is installed between the mid-case 111 and the cartridge 20. The gasket 130 is mounted on the humidification module 110 through mechanical assembling. Therefore, when an abnormality occurs in a specific portion (e.g., the cartridge 20) of the humidification module 110, the mid-case 111 and gasket 130 may be simply mechanically separated from the humidification module 110, and then, only the corresponding portion may be repaired or replaced.

In the humidification module 110 described above, the off-gas outlet 113 is formed on the bottom surface side of the mid-case 111, so that condensate may be naturally discharged to the outside by its own weight.

Preferably, at least a portion of the off-gas outlet 113 may be formed to come into contact with the bottom surface of the mid-case 111.

At least a portion of the off-gas outlet 113 may come into contact with the bottom surface of the mid-case 111, and the virtual central axis of the off-gas outlet 113 may be formed to be parallel to the bottom surface of the mid-case 111.

Alternatively, at least a portion of the off-gas outlet 113 may come into contact with the bottom surface of the mid-case 111, and the virtual central axis of the off-gas outlet 113 may be formed to be inclined in the direction of gravity with respect to the bottom surface of the mid-case 111.

As described above, because the off-gas outlet 113 is formed on the bottom surface of the mid-case 111, the discharge performance of condensate generated in the humidification module 110 may be improved. In addition, additional components for discharging condensate may be omitted, resulting in a reduction in manufacturing costs, and space for additional components to be installed is not required, making it possible to implement compact fuel cell systems.

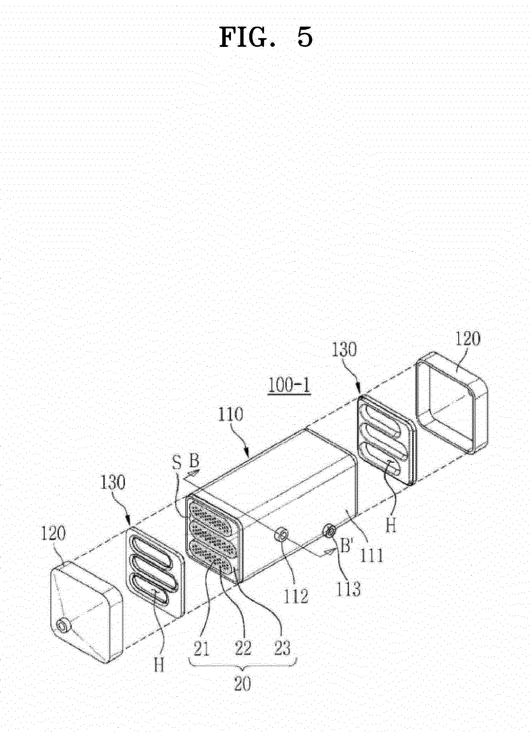

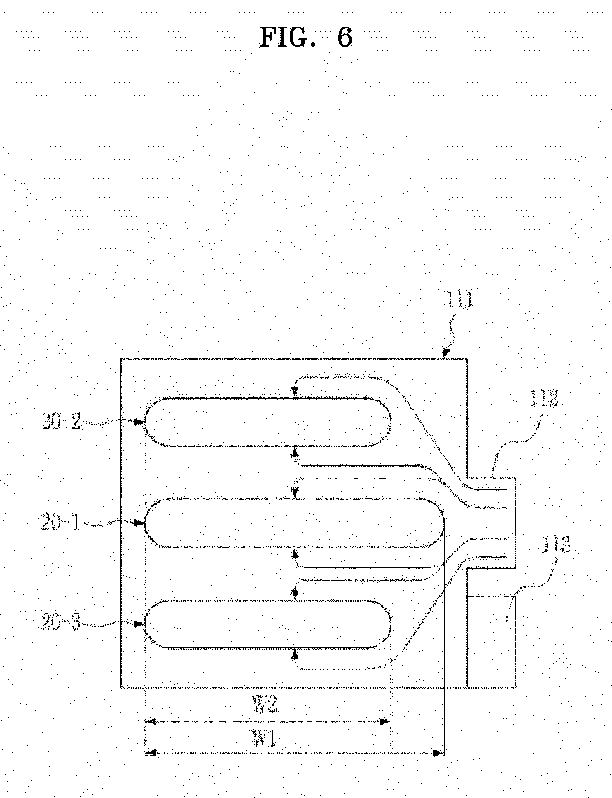

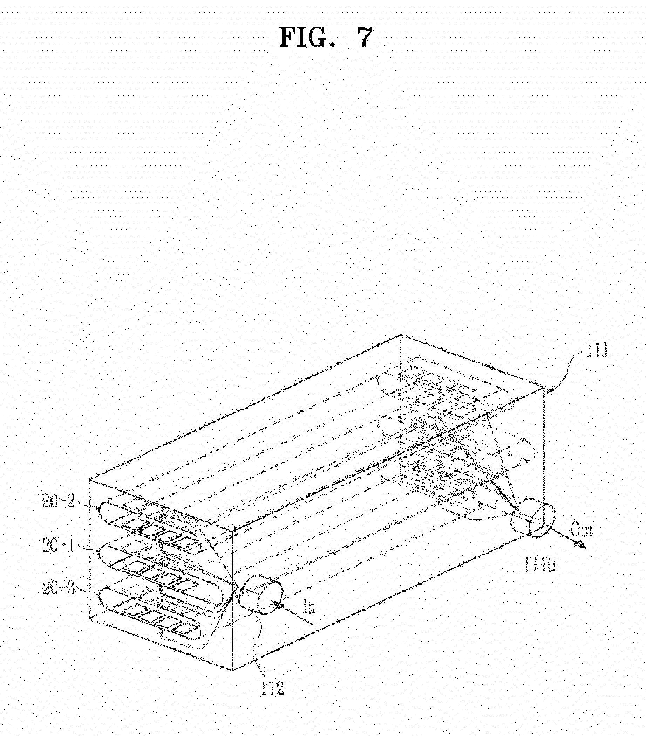

Next, a fuel cell membrane humidifier according to another embodiment of the present disclosure is described with reference to FIGS. 5 to 7. FIG. 5 is an exploded perspective view illustrating the fuel cell membrane humidifier according to another embodiment of the present disclosure, FIG. 6 is a cross-sectional view of a right side when taken along line B-B' of FIG. 5, and FIG. 7 is a perspective view for describing an operating state within a humidification module of the fuel cell membrane humidifier according to another embodiment of the present disclosure.

In the present embodiment, a plurality of cartridges 20 are disposed in a mid-case 111. For example, three cartridges 20-1, 20-2, and 20-3 may be disposed as illustrated in FIGS. 5 to 7. Of course, this is only an example for explanation and the present disclosure is not limited thereto. Among the cartridges, the cartridge 20-1 disposed closest to an off-gas inlet 112 is referred to as a first cartridge, and the remaining cartridges 20-2 and 20-3 are referred to as second cartridges.

The first cartridge 20-1 disposed closest to the off-gas inlet 112 is formed to have a greatest first width W1 among the cartridges 20-1, 20-2, and 20-3, and the remaining second cartridges 20-2 and 20-3 are formed to have a second width W2 less than the first width W1. In the drawings, it is illustrated that the cartridge 20-1 disposed in the center is formed to have the first width W1, but this may vary depending on the position of the off-gas inlet 112. That is, when the off-gas inlet 112 is formed at the upper side, the cartridge 20-2 may be formed to have the first width W1.

The first cartridge 20-1 is formed to have the greatest first width W1, and one side of the first cartridge 20-1 is disposed closest to the off-gas inlet 112. In this case, the other sides of the cartridges 20-1, 20-2, and 20-3 may be arranged in a line, as illustrated in FIG. 6. Of course, the other sides of the cartridges 20-1, 20-2, and 20-3 may not necessarily be arranged in a line. Even in this case, one side of the first cartridge 20-1 is disposed closest to the off-gas inlet 112.

The operation of the fuel cell membrane humidifier 100-1 configured as above, according to another embodiment of the present disclosure, is described with reference to FIGS. 6 and 7.

Air supplied from the outside flows along cavities of hollow fiber membranes 21. The off-gas flowing into the mid-case 111 through the off-gas inlet 112 flows into the inner case 23 through a first mesh hole MH1 formed in the inner case 23 and comes into contact with the outer surfaces of the hollow fiber membranes 21. Subsequently, the off-gas flows out of the inner case 23 through a second mesh hole MH2 and is then discharged from the mid-case 111 through an off-gas outlet 113. When the off-gas comes into contact with the outer surfaces of the hollow fiber membranes 21, moisture contained in the off-gas penetrates through the hollow fiber membranes 21, and air flowing along the cavities of the hollow fiber membranes 21 is humidified.

At this time, a portion of the off-gas flowing into the mid-case 111 through the off-gas inlet 112 is guided to the side while hitting one side of the first cartridge 20-1 having the greatest first width W1. On the other hand, the second cartridges 20-2 and 20-3 have a width less than the width of the first cartridge 20-1 and are disposed at positions far away from the off-gas inlet 112 on the side of the first cartridge 20-1. Accordingly, the second cartridges 20-2 and 20-3 are supplied with at least a portion of the off-gas guided by the first cartridge 20-1. Of course, the second cartridges 20-2 and 20-3 are not necessarily supplied with only the off-gas guided by the first cartridge 20-1.

On the other hand, when the cartridges 20 have the same width and are disposed regardless of the position of the off-gas inlet 112, the cartridge disposed far from the off-gas inlet 112 is not supplied with sufficient off-gas, and the cartridge disposed close to the off-gas inlet 112 is supplied with excessive off-gas, resulting in different humidification efficiency for each cartridge.

On the other hand, as illustrated in FIGS. 5 to 7, when the cartridges 20 have different widths and the first cartridge 20-1 with the greatest first width W1 is disposed closest to the off-gas inlet 112 by taking into account the position of the off-gas inlet 112, the cartridges 20-1, 20-2, and 20-3 may be supplied with evenly distributed off-gas.

In addition, the off-gas outlet 113 is formed on the bottom surface side of the mid-case 111, so that condensate may be naturally discharged to the outside by its own weight. The description of the off-gas outlet 113 is substantially the same as the description of the embodiment described above.

While the embodiments of the present disclosure have been described, it will be understood by those of ordinary skill in the art that various modifications and changes may be made therein through inclusion, alteration, removal or addition of elements without departing from the spirit and scope of the present disclosure as defined by the following claims. Furthermore, it will be understood that this also falls within the scope of the present disclosure.

### EXPLANATION OF REFERENCE NUMERALS DESIGNATING THE MAJOR ELEMENTS OF THE DRAWINGS

110: humidification module
111: mid-case
112: off-gas inlet
113: off-gas outlet
114: partition wall
120: cap
20: cartridge
21: hollow fiber membrane
22: potting portion
23: inner case

## Claims

1. A fuel cell membrane humidifier comprising:
a humidification module configured to humidify air supplied from outside with moisture in off-gas discharged from a fuel cell stack; and
caps respectively coupled to both ends of the humidification module,
wherein the humidification module comprises a mid-case in which an off-gas inlet through which the off-gas is introduced and an off-gas outlet through which the off-gas is discharged are formed, and
the off-gas outlet is formed on a bottom surface side of the mid-case and configured to discharge condensate generated in the humidification module to the outside.

2. The fuel cell membrane humidifier of claim 1, wherein at least a portion of the off-gas outlet is formed to come into contact with a bottom surface of the mid-case.

3. The fuel cell membrane humidifier of claim 1, wherein at least a portion of the off-gas outlet comes into contact with a bottom surface of the mid-case, and a virtual central axis of the off-gas outlet is formed to be parallel to the bottom surface of the mid-case.

4. The fuel cell membrane humidifier of claim 1, wherein at least a portion of the off-gas outlet comes into contact with a bottom surface of the mid-case, and a virtual central axis of the off-gas outlet is formed to be inclined in a direction of gravity with respect to the bottom surface of the mid-case.

5. The fuel cell membrane humidifier of claim 1, wherein a plurality of cartridges are disposed in the mid-case and configured to accommodate a plurality of hollow fiber membranes,
the plurality of cartridges comprise a first cartridge disposed closest to the off-gas inlet, and a second cartridge disposed at a position farther away than the first cartridge on at least one side of the first cartridge with respect to the off-gas inlet, and
the second cartridge is supplied with at least a portion of off-gas flowing into the off-gas inlet and at least a portion of off-gas distributed by the first cartridge.

6. The fuel cell membrane humidifier of claim 5, wherein the first cartridge is formed to have a greatest first width (W1) among the plurality of cartridges.

7. The fuel cell membrane humidifier of claim 5, wherein the second cartridge is formed to have a second width (W2) less than the first width (W1).
